# EUROPÄISCHE PATENTSCHRIFT

(11) **EP 1 000 516 B1**
(45) Veröffentlichungstag und Bekanntmachung des Hinweises auf die Patenterteilung: **14.05.2003**
(21) Anmeldenummer: 98947324.4
(22) Anmeldetag: 21.07.1998
(51) Int. Cl.: H04Q 7/32

(54) **VERFAHREN UND VORRICHTUNG ZUR STEUERUNG DES EMPFANGS VON DATENPAKETEN IN EINER MOBILSTATION**
METHOD AND DEVICE FOR CONTROLLING THE RECEPTION OF DATA PACKETS IN A MOBILE STATION
PROCEDE ET DISPOSITIF POUR COMMANDER LA RECEPTION DE PAQUETS DE DONNEES DANS UNE STATION MOBILE

(30) Priorität: 31.07.1997 DE 19733118
(43) Veröffentlichungstag der Anmeldung: 17.05.2000
(73) Patentinhaber: SIEMENS AKTIENGESELLSCHAFT, 80333 München (DE)
(72) Erfinder: RAAF, Bernhard, D-81475 München (DE)
(86) Internationale Anmeldenummer: DE9802043
(87) Internationale Veröffentlichungsnummer: WO99009770

(56) Entgegenhaltungen:
- EP-A- 0 540 808
- US-A- 5 199 031
- MOULY M ET AL: "The GSM system for Mobile Communications" 1993 , EUROPE MEDIA , LASSAY-LES-CHATEAUX XP002089392 siehe Seite 214 - Seite 215 siehe Seite 333 - Seite 336

## Beschreibung

Die vorliegende Erfindung betrifft ein Verfahren zur Steuerung des Empfangs von Datenpaketen in einer Empfangseinheit einer Mobilstation eines Mobilfunksystems gemäß dem Oberbegriff des Anspruches 1 und gemäß dem Oberbegriff des Anspruches 2, sowie eine Mobilstation eines Mobilfunksystems mit einer Steuervorrichtung zur Steuerung des Empfangs von Datenpaketen in einer Empfangseinheit der Mobilstation gemäß dem Oberbegriff des Anspruches 10 und gemäß dem Oberbegriff des Anspruches 11.

Derartige Verfahren zur Steuerung des Empfangs von Datenpaketen in einer Empfangseinheit einer Mobilstation eines Mobilfunksystems und derartige Mobilstationen mit Steuervorrichtungen zur Steuerung des Empfangs von Datenpaketen in einer Empfangseinheit der Mobilstation sind aus dem Stand der Technik bekannt. Unter anderem beleuchten dabei EP 0540 808 A und US 5199031 den technischen Hintergrund der Erfindung.

Während eines Gespräches, d. h. im verbundenen Zustand, und während der Empfangsbereitschaft, d. h. im Idle-Zustand, muss eine Mobilstation eines Mobilfunksystems, während sie mit einer aktuellen Basisstation in Verbindung steht, regelmäßig auf vorgegebenen Frequenzen nach Datenpaketen von benachbarten Basisstationen suchen und deren Identität erkennen. Die Erkennung der Identität erfolgt in der Regel über die Decodierung des sogenannten BSIC (Basisstation-Identitätscode) im Synchronisationsdatenpaket. Dazu sendet jede Basisstation regelmäßig Synchronisationsdatenpakete aus. Im GSM-Standard senden die Basisstationen alle zehn bis elf Zeitrahmen ein Synchronisationsdatenpaket mit der Dauer von einem Zeitschlitz aus, wobei acht Zeitschlitze einen Zeitrahmen bilden.

Im GSM-Standard kann eine Mobilstation im Gesprächszustand alle 26 Rahmen für die Dauer von etwas mehr als einem Zeitrahmen einen Nachbarkanal beobachten. Dieser eine Zeitrahmen ist der sogenannte Idle-Rahmen, in dem die Mobilstation keine Daten mit der aktuellen Basisstation austauscht. Der Idle-Rahmen wird dazu verwendet, Nachbarkanäle zu beobachten und gegebenenfalls Synchronisationsdatenpakete benachbarter Basisstationen zu finden und zu decodieren. Die Basisstationen senden im GSM-Standard innerhalb jeweils eines aus 51 Zeitrahmen bestehenden Multirahmens fünf Synchronisationsdatenpakete von der Dauer eines Zeitschlitzes aus. Diese Synchronisationsdatenpakete werden vier mal alle zehn und dann einmal nach elf Rahmen von den Basisstationen ausgesendet. Da die Mobilstationen alle 26 Zeitrahmen jeweils einen Idle-Rahmen zur Beobachtung der Nachbarkanäle zur Verfügung hat, kann eine Mobilstation unabhängig vom relativen Timing der Synchronisationsdatenpakete der Basisstationen nach spätestens elf Idle-Rahmen ein Synchronisationsdatenpaket einer benachbarten Basisstation empfangen. Eine andere bekannte Möglichkeit ist, nicht in zwei aufeinanderfolgenden Idle-Rahmen einen bestimmten Nachbarkanal zu beobachten, sondern die Mobilstation in jedem zweiten Idle-Rahmen auf den Empfang von Datenpaketen der benachbarten Basisstation zu schalten. Dieses Verfahren ist etwas eleganter, jedoch verdoppelt sich die mittlere Zeitdauer bis zum Empfangen eines Synchronisationsdatenpaketes von einer benachbarten Basisstation.

Befindet sich eine Mobilstation in Empfangsbereitschaft, d. h. im Idle-Zustand, steht mehr Zeit zur Beobachtung von Nachbarkanälen zur Verfügung, da nicht ständig Daten mit der aktuellen Basisstation ausgetauscht werden müssen. Die Mobilstation kann dann kontinuierlich auf den Empfang von Datenpaketen jeweils einer benachbarten Basisstation geschaltet werden und erkennt damit spätestens nach elf Zeitrahmen ein Synchronisationsdatenpaket einer benachbarten Basisstation. Sollte eine benachbarte Basisstation nicht empfangen werden können, da beispielsweise die Entfernung der Mobilstation zur Basisstation zu groß ist oder auf dem Übertragungsweg zu starke Störungen vorhanden sind, so steht das während der Empfangsbereitschaft der Mobilstation nach elf Zeitrahmen und im Gesprächszustand nach 26 × 11 Zeitrahmen fest.

In dem aus dem Stand der Technik bekannten Verfahren und Vorrichtungen zur Steuerung des Empfangs von Datenpaketen in einer Mobilstation wird die Empfangseinheit der Mobilstation auf den Empfang von Synchronisationsdatenpaketen geschaltet, d. h. es wird nach Synchronisationsdatenpaketen der jeweiligen benachbarten Basisstationen gesucht. Die Synchronisationsdatenpakete dienen der Mobilstation dazu, sich auf die benachbarten Basisstationen zu synchronisieren, um den Übergang von einer aktuellen Basisstation zu einer benachbarten Basisstation zu ermöglichen. Im GSM-Standard senden die Basisstationen jeweils einen Zeitrahmen vor den Synchronisationsdatenpaketen ein Frequenzkorrekturdatenpaket aus, das bei (Wieder-)Aufnahme der Verbindung von einer Mobilstation zu einer benachbarten Basisstation zur Anpassung der Frequenz des Quarzoszillators der Mobilstation auf die Basisstation verwendet wird. Da der Quarzoszillator in den Mobilstationen in der Regel nicht ausreichend frequenzstabil ist, benutzt die Mobilstation das Frequenzkorrekturdatenpaket beim erstmaligen Aufsynchronisieren auf eine Basisstation zur Bestimmung der Frequenz der Basisstation relativ zur Frequenz des Quarzoszillators.

Nachteilig bei den aus dem Stand der Technik bekannten Verfahren und Vorrichtungen zur Steuerung des Empfangs von Datenpaketen in einer Empfangseinheit einer Mobilstation eines Mobilfunksystemes ist, daß die Empfangseinheit der Mobilstation in jedem der einer bestimmten benachbarten Basisstation zugeordneten Zeitrahmen (z. B. Idle-Rahmen im Gesprächszustand) eingeschaltet wird, um zu versuchen, Synchronisationsdatenpakete von der jeweiligen Basisstation zu empfangen. Das bedeutet, daß die Empfangseinheit auch dann auf den Empfang von Synchronisationsdatenpaketen geschaltet wird, wenn überhaupt keine Hoffnung besteht, Synchronisationsdatenpakete von der jeweiligen Basisstation empfangen zu können. Das Einschalten der Empfangseinheit in der Mobilstation kostet jedoch Energie und verringert die Gesprächszeit und die Empfangsbereitschafts-Zeitdauer der Mobilstation.

Die Aufgabe der vorliegenden Erfindung ist somit, ein Verfahren zur Steuerung des Empfangs von Datenpaketen in einer Empfangseinheit einer Mobilstation eines Mobilfunksystems gemäß dem Oberbegriff des Anspruches 1 und dem Oberbegriff des Anspruches 2, sowie eine Mobilstation eines Mobilfunksystems mit einer Steuervorrichtung zur Steuerung des Empfangs von Datenpaketen in einer Empfangseinheit der Mobilstation gemäß dem Oberbegriff des Anspruches 11 und gemäß dem Oberbegriff des Anspruches 12 bereitzustellen, die eine Verringerung des Stromverbrauches in der Mobilstation gewährleisten.

Diese Aufgabe wird durch das Verfahren zur Steuerung des Empfangs von Datenpaketen in einer Mobilstation eines Mobilfunksystems mit den Merkmalen des Anspruches 1 bzw. des Anspruches 2, sowie durch die Mobilstation eines Mobilfunksystems mit einer Steuervorrichtung zur Steuerung des Empfangs von Datenpaketen in einer Empfangseinheit der Mobilstation mit den Merkmalen des Anspruches 11 bzw. 12 gelöst.

Vorteilhafte Ausgestaltungen der vorliegenden Erfindung sind dabei in den jeweiligen Unteransprüchen angegeben.

Die vorliegende Erfindung stellt ein Verfahren zur Steuerung des Empfangs von Datenpaketen in einer Empfangseinheit einer Mobilstation eines Mobilfunksystems bereit, bei dem die Empfangseinheit jeweils während vorgegebener Zeitrahmen auf den Empfang von zu detektierenden Datenpaketen von Basisstationen geschaltet werden kann, wobei mehrere vorgegebene Zeitrahmen jeweils dem Empfang von Datenpaketen einer bestimmten Basisstation zugeordnet sind und die Basisstation in einem vorgegebenen Zeitabstand vor den zu detektierenden Datenpaketen charakteristische Datenpakete aussenden, dadurch gekennzeichnet, daß die Empfangseinheit während der vorgegebenen Zeitrahmen, in denen sie auf den Empfang von zu detektierenden Datenpaketen geschaltet wird, auch auf den Empfang von charakteristischen Datenpaketen der jeweiligen Basisstation geschaltet wird, und daß die Empfangseinheit, wenn sie in einem vorgegebenen Zeitrahmen weder ein zu detektierendes Datenpaket noch ein charakteristisches Datenpaket von der jeweiligen Basisstation empfängt, während dem nächsten vorgegebenen Zeitrahmen, der dieser Basisstation zugeordnet ist und in dem kein zu detektierendes Datenpaket von dieser Basisstation auftreten kann, nicht auf den Empfang von Datenpaketen von dieser Basisstation geschaltet wird. Entsprechend wird erfindungsgemäß eine Mobilstation eines Mobilfunksystems mit einer Steuervorrichtung zur Steuerung des Empfangs von Datenpaketen in einer Empfangseinheit der Mobilstation bereitgestellt, wobei die Steuervorrichtung die Empfangseinheit jeweils während vorgegebener Zeitrahmen auf den Empfang von zu detektierenden Datenpaketen von Basisstationen schalten kann, wobei mehrere vorgegebene Zeitrahmen jeweils dem Empfang von Datenpaketen einer bestimmten Basisstation zugeordnet sind und die Basisstationen in einem vorgegebenen Zeitabstand vor den zu detektierenden Datenpaketen charakteristische Datenpakete aussenden, dadurch gekennzeichnet, daß die Steuervorrichtung die Empfangseinheit während der vorgegebenen Zeitrahmen, in denen sie diese auf den Empfang von zu detektierenden Datenpaketen schaltet, auch auf den Empfang von charakteristischen Datenpaketen der jeweiligen Basisstation schaltet, und die Empfangseinheit, wenn sie in einem vorgegebenen Zeitrahmen weder ein zu detektierendes Datenpaket noch ein charakteristisches Datenpaket von der jeweiligen Basisstation empfängt, während der nächste vorgegebene Zeitrahmen, der dieser Basisstation zugeordnet ist und in dem kein zu detektierendes Datenpaket von dieser Mobilstation auftreten kann, nicht auf den Empfang von Datenpaketen von dieser Basisstation schaltet.

Bei dieser ersten Variante der vorliegenden Erfindung wird damit bei der Nachbarkanalbeobachtung die Empfangseinheit sowohl auf den Empfang von zu detektierenden Datenpaketen als auch von charakteristischen Datenpaketen geschaltet. Bei der Erkennung und Auswertung der zu detektierenden Datenpakete und der charakteristischen Datenpakete in der Mobilstation können dabei ähnliche Algorithmen verwendet werden, da sich beide Arten von Datenpaketen durch eine lange bekannte Bitfolge auszeichnen. Die erste Variante der vorliegenden Erfindung beruht insbesondere darauf, daß, wenn in einem Zeitrahmen weder ein charakteristisches noch ein zu detektierendes Datenpaket empfangen wird, im nächsten Zeitrahmen kein zu detektierendes Datenpaket vorliegen kann, sondern höchstens ein charakteristisches Datenpaket. Der Grund dafür ist, daß die Basisstationen jeweils einen Zeitrahmen vor jedem zu detektierenden Datenpaket ein charakteristisches Datenpaket aussenden. Wenn kein charakteristisches Datenpaket von der Empfangseinheit der Mobilstation empfangen wurde, kann damit im nächsten Zeitrahmen kein zu detektierendes Datenpaket auftreten. Während diesem Zeitrahmen kann somit auf die Beobachtung dieser benachbarten Basisstation verzichtet werden.

Im Empfangsbereitschaftszustand und auch beim Einschalten der Mobilstation betrifft das also den unmittelbar darauffolgenden Zeitrahmen, da die Mobilstation im Empfangsbereitschaftszustand mehrere direkt aufeinander folgende Zeitrahmen für die Beobachtung einer bestimmten Basisstation verwendet. Empfängt die Empfangseinheit in einem vorgegebenen Zeitrahmen weder ein zu detektierendes Datenpaket noch ein charakteristisches Ddtenpaket, so kann sie sicher sein, daß im unmittelbar darauffolgenden Zeitrahmen kein zu detektierendes Datenpaket von dieser Basisstation auftreten kann. Die Empfangseinheit kann damit während dieses unmittelbar darauffolgenden Zeitrahmens ausgeschaltet bleiben, wodurch eine erhebliche Stromeinsparung in der Mobilstation erreicht wird.

Im GSM-System erfolgt im Gesprächszustand die Beobachtung einer bestimmten benachbarten Basisstation in der Regel alle 26 Zeitrahmen während des Idle-Rahmens. Da die grundsätzliche Wiederholrate der Folge eines (charakteristischen) Frequenzkorrekturdatenpaketes und eines (zu detektierenden) Synchronisationsdatenpaketes von den Basisstationen 51 Zeitrahmen beträgt, kann die Empfangseinheit der Mobilstation, wenn sie in einem vorgegebenen Zeitrahmen weder ein Synchronisationsdatenpaket noch ein Frequenzdatenpaket von der jeweiligen benachbarten Basisstation empfängt, somit im übernächsten vorgegebenen Zeitrahmen ausgeschaltet bleiben. Dieser übernächste Zeitrahmen ist im GSM-System der übernächste Idle-Zeitrahmen, der nach (2×26=)52 Zeitrahmen wieder auftritt. Da die Wiederholrate der Frequenzkorrekturdatenpakete und Zu detektierende Datenpakete von der Basisstation 51 Zeitrahmen beträgt, kann somit, wenn in einem bestimmten Zeitrahmen weder ein Synchronisationsdatenpaket noch ein Frequenzkorrekturdatenpaket auftritt, mit Sicherheit vorausgesagt werden, daß nach (51+1=)52 Zeitrahmen kein Synchronisationsdatenpaket von der gleichen Basisstation auftreten kann. Damit kann die Empfangseinheit der Mobilstation beim übernächsten Zeitrahmen ausgeschaltet bleiben. Auch hier ergibt sich damit eine erhebliche Stromeinsparung.

Im Empfangsbereitschaftszustand der Mobilstation verringert sich durch die erste Variante der vorliegenden Erfindung die Zeit, während der die Empfangseinheit für die Nachbarkanalsuche eingeschaltet werden muß, um fast 50 % (genauer: 7/16 = 44 %), was eine erhebliche Stromeinsparung und damit eine erhebliche Verlängerung der Empfangsbereitschaftszeit der Mobilstation zur Folge hat.

Die vorliegende Erfindung betrifft weiterhin ein Verfahren zur Steuerung des Empfangs von Datenpaketen in einer Empfangseinheit einer Mobilstation eines Mobilfunksystems, bei dem die Empfangseinheit jeweils während vorgegebener Zeitrahmen auf den Empfang von zu detektierenden Datenpaketen von Basisstationen geschaltet werden kann, wobei mehrere vorgegebene Zeitrahmen jeweils dem Empfang von Datenpaketen einer bestimmten Basisstation zugeordnet sind und die Basisstationen in einem vorgegebenen Zeitabstand vor den zu detektierenden Datenpaketen charakteristische Datenpakete aussenden, dadurch gekennzeichnet, daß die Empfangseinheit während der vorgegebenen Zeitrahmen, in denen sie auf den Empfang von zu detektierenden Datenpaketen geschaltet wird, auch auf den Empfang von charakteristischen Datenpaketen und Normaldatenpaketen von der jeweiligen Mobilstation geschaltet wird, wobei die Normaldatenpakete jeweils eine Trainingssequenz aufweisen, und daß die Empfangseinheit jeweils am Anfang eines einer bestimmten Basisstation zugeordneten Zeitrahmens zumindest ein Normaldatenpaket von der jeweiligen Basisstation empfängt, um die Lage der Trainingssequenz in den Normaldatenpaketen der jeweiligen Basisstation zu bestimmen, woraufhin die Empfangseinheit in den der jeweiligen Basisstation zugeordneten Zeitrahmen nur während den den Trainingssequenzen der Normaldatenpakete entsprechenden Zeiten auf Empfang von Datenpaketen von der jeweiligen Basisstation geschaltet wird.

Entsprechend wird erfindungsgemäß eine Mobilstation eines Mobilfunksystems mit einer Steuervorrichtung zur Steuerung des Empfangs von Datenpaketen in einer Empfangseinheit der Mobilstation bereitgestellt, wobei die Steuervorrichtung die Empfangseinheit jeweils während vorgegebener Zeitrahmen auf den Empfang von zu detektierenden Datenpaketen von Basisstationen schalten kann, wobei mehrere vorgegebene Zeitrahmen jeweils dem Empfang von Datenpaketen einer bestimmten Basisstation zugeordnet sind und die Basisstation in einem vorgegebenen Zeitabstand vor den zu detektierenden Datenpaketen charakteristische Datenpakete aussenden, dadurch gekennzeichnet, daß die Steuervorrichtung die Empfangseinheit während der vorgegebenen Zeitrahmen, in denen sie diese auf den Empfang von zu detektierenden Datenpaketen schaltet, auch auf den Empfang von charakteristischen Datenpaketen und Normaldatenpaketen von der jeweiligen Mobilstation schaltet, wobei die Normaldatenpakete jeweils eine Trainingssequenz aufweisen, und daß die Empfangseinheit jeweils am Anfang eines einer bestimmten Basisstation zugeordneten Zeitrahmens zumindest ein Normaldatenpaket von der jeweiligen Basisstation empfängt, aus dem eine Auswerteeinheit die Lage der Trainingssequenz in den Normaldaten der jeweiligen Basisstation bestimmt, woraufhin die Steuervorrichtung die Empfangseinheit in den der jeweiligen Basisstation zugeordneten Zeitrahmen nur während den den Trainingssequenzen der Normaldatenpakete entsprechende Zeiten auf Empfang von Datenpaketen von der jeweiligen Basisstation schaltet.

Diese zweite Variante der vorliegenden Erfindung beruht somit darauf, daß die Empfangseinheit der Mobilstation charakteristische, zu detektierende und Normaldatenpakete empfangen kann. Aus dem Empfang mindestens eines Normaldatenpaketes kann die Mobilstation die Lage der Trainings Sequenzen der Normaldatenpakete bestimmen, woraufhin die Empfangseinheit nur während den der Lage der Trainingssequenzen der Normaldatenpakete entsprechenden Zeiten auf den Empfang von Datenpaketen der benachbarten Basisstation geschaltet wird. Hierdurch wird vermieden, daß die Empfangseinheit zu solchen Zeiten auf Empfang von Datenpaketen der jeweiligen Basisstation geschaltet wird, in denen der Empfang und die Detektion von charakteristischen oder zu detektierenden Datenpaketen nicht oder kaum möglich ist. Auch hierdurch ergibt sich eine erhebliche Stromeinsparung in der Mobilstation.

Das Verfahren und die Mobilstationen der ersten bzw. zweiten Variante der vorliegenden Erfindung lassen sich in vorteilhafter Weise kombinieren, wodurch eine noch stärkere Stromeinsparung in einer Mobilstation erreicht werden kann.

Vorteilhafterweise wird bei der zweiten Variante der vorliegenden Erfindung bzw. bei der Kombination aus der ersten und der zweiten Variante der vorliegenden Erfindung die Empfangseinheit in den der jeweiligen Basisstation zugeordneten Zeitrahmen nur in einem Teil der den Trainingssequenzen der Normaldatenpakete entsprechenden Zeiträume von der Steuervorrichtung auf Empfang von Datenpaketen von der jeweiligen Basisstation geschaltet, wobei der Teil der Zeiträume dergestalt festgelegt ist, daß die in ihm enthaltenen Daten zur Unterscheidung von verschiedenen Arten von Datenpaketen ausreicht. Da die Trainingssequenzen der Normaldatenpakete und die sich an entsprechender Stelle befindenden Bitfolgen der zu detektierenden Datenpakete und charakteristischen Datenpakete von vornherein festliegen und unterschiedlich sind, reichen im Extremfall zwei Bits zum Erkennen und Unterscheiden der verschiedenen Arten von Datenpaketen. Im Extremfall reicht es daher, die Empfangseinheit nur während zweiter Bits auf den Empfang von Datenpaketen der Basisstation zu schalten. Hierdurch läßt sich eine weitere starke Reduzierung des Stromverbrauchs in der Mobilstation erreichen.

Bei der zweiten Variante der vorliegenden Erfindung bzw. der Kombination aus der ersten und der zweiten Variante der vorliegenden Erfindung wird vorteilhafterweise durch die Steuervorrichtung die genaue Lage der Trainingssequenz in den Normaldatenpaketen durch Vergleich der Trainingssequenz des zumindest einen empfangenen Normaldatenpaketes mit in einem Speicher der Mobilstation gespeicherten möglichen Trainingssequenzen bestimmt. Die Normaldatenpakete können beispielsweise im GSM-Standard bis zu 9 verschiedene Bitfolgen in den Trainingsfrequenzen aufweisen. Damit ist die Erkennung einer Trainingssequenz eines Normaldatenpaketes relativ aufwendig. Es ist daher von Vorteil, wenn die empfangenen Bitfolgen mit möglichen Trainingssequenzen verglichen werden, um festzustellen, ob tatsächlich eine Trainingssequenz eines Normaldatenpaketes vorliegt und wo ihre genaue Lage ist. Dabei wird die Genauigkeit erhöht, wenn die Empfangseinheit am Anfang eines bestimmten Zeitrahmens mehrere Normaldatenpakete empfangen kann, da nur die korrekten Trainingssequenzen sich streng im Zeitrahmenraster der Normaldatenpakete wiederholen.

Bei beiden Varianten der vorliegenden Erfindung wird vorteilhafterweise, wenn die Empfangseinheit in einem vorgegebenen Zeitrahmen ein charakteristisches Datenpaket von der jeweiligen Basisstation empfängt, die Empfangseinheit von der Steuervorrichtung erst wieder bei zu detektierenden Datenpakete von den charakteristischen Datenpaketen festgelegten Zeitpunkt auf den Empfang von Datenpaketen von dieser Basisstation umgeschaltet. Da ein (charakteristisches) Frequenzkorrekturdatenpaket im GSM-Standard jeweils einen Zeitrahmen vor einem (zu detektierenden) Synchronisationsdatenpaket von den Basisstationen ausgesendet wird, kann daher, wenn ein Frequenzkorrekturdatenpaket empfangen wird, die Empfangseinheit während einem Zeitrahmen ausgeschaltet bleiben, da die Lage des Synchronisationsdatenpaketes in diesem Fall genau bekannt ist.

Weiterhin wird bei beiden Variationen der vorliegenden Erfindung vorteilhafterweise die Empfangseinheit, wenn sie während einem der nächsten vorgegebenen Zeitrahmen nicht auf den Empfang von zu detektierenden und charakteristischen Datenpaketen von der jeweiligen Basisstation geschaltet wird, von der Steuervorrichtung auf den Empfang von Datenpaketen von einer anderen Basisstation geschaltet. Das ist insbesondere im Gesprächszustand der Mobilstation von Vorteil, da Basisstationen schneller gefunden werden können. Auch hier ergibt sich der Vorteil einer Reduktion des Stromverbrauches, da bei einem Handover rascher auf eine gegebenenfalls stärker sendende Basisstation umgeschaltet werden kann. Weiterhin kann in voll ausgebauten Mobilfunknetzen hierdurch die Zellgröße entsprechend verringert und in der Folge die Kapazität an Gesprächen erhöht werden. Außerdem verlieren Mobilstationen, die sich relativ schnell durch Kleinzellennetze bewegen (Auto in der Stadt) ein Gespräch, wenn sie nicht schnell genug neue benachbarte Basisstationen finden können. Auch dieses Problem wird durch diese Ausgestaltung der vorliegenden Erfindung gelöst.

Weiterhin kann es bei beiden Variationen der vorliegenden Erfindung von Vorteil sein, wenn die von der Empfangseinheit in einem vorgegebenen Zeitraum von einer jeweiligen Basisstation empfangenen Datenpakete in einem Speicher gespeichert und nach dem vorgegebenen Zeitraum von der Steuervorrichtung ausgewertet werden. Dies ist insbesondere bei einer langsamen Signalverarbeitung in der Mobilstation von Vorteil, bei der die empfangenen Datenpakete nicht in Echtzeit identifiziert werden können.

Im GSM-System sind die zu detektierenden Datenpakete Synchronisationsdatenpakete und die charakteristischen Datenpakete Frequenzkorrekturdatenpakete.

Die vorliegende Erfindung wird im folgenden anhand der beigefügten Zeichnungen näher erläutert, in denen zeigen
Fig. 1 eine schematische Ansicht eines Teils einer erfindungsgemäßen Mobilstation,
Fig. 2 eine schematische Ansicht eines Zeitrahmenrasters zur Verdeutlichung der ersten Variante der vorliegenden Erfindung,
Fig. 3 eine schematische Ansicht eines Zeitschlitzrasters zur näheren Erläuterung des in Fig. 2 gezeigten Zeitrahmenrasters,
Fig. 4 eine schematische Ansicht eines Zeitrahmenrasters zur Erläuterung der zweiten Variante der vorliegenden Erfindung, und
Fig. 5 eine schematische Ansicht eines Zeitschlitzrasters zur näheren Erläuterung von Fig. 4.

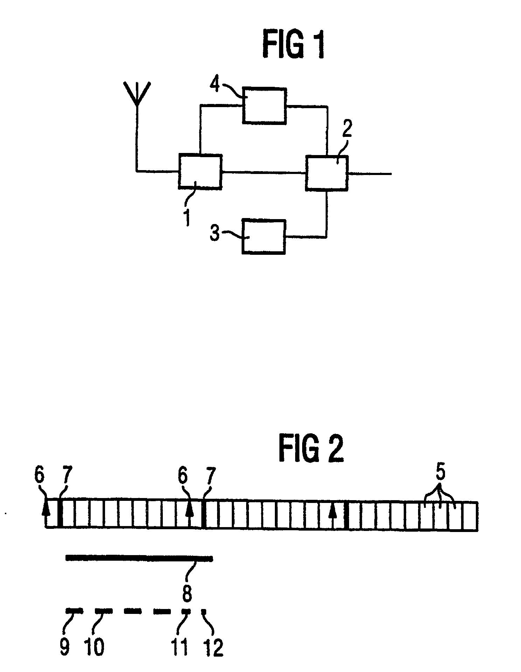

Fig. 1 zeigt eine schematische Ansicht eines Teils einer erfindungsgemäßen Mobilstation für ein Mobilfunksystem mit einer Empfangseinheit 1, die von einer Steuervorrichtung 2 auf den Empfang von Datenpaketen geschaltet werden kann. Die von einer aktuellen oder von benachbarten Basisstationen kommenden Datenpakete werden über eine Antenne zu der Empfangseinheit 1 geleitet.

Die Steuervorrichtung 2 kann die Empfangseinheit 1, beispielsweise während sich die Mobilstation im Gesprächszustand mit einer aktuellen Basisstation befindet, während der alle 26 Zeitrahmen auftretenden Idle-Zeitrahmen auf den Empfang von Datenpaketen von benachbarten Basisstationen schalten. Im Empfangsbereitschaftszustand kann die Steuervorrichtung 2 die Empfangseinheit 1 während mehrerer aufeinanderfolgender Zeitrahmen auf den Empfang von Datenpaketen von benachbarten Basisstationen schalten. Im Empfangsbereitschaftszustand der Mobilstation sind also mehrere aufeinanderfolgende Zeitrahmen dem Empfang von Datenpaketen von einer bestimmten benachbarten Basisstation zugeordnet, während im Gesprächszustand der Mobilstation jeweils mehrere aufeinanderfolgende Idle-Zeitrahmen dem Empfang von Datenpaketen einer bestimmten benachbarten Basisstation zugeordnet sind.

Gemäß der ersten Variante der vorliegenden Erfindung kann die Empfangseinheit 1 Synchronisationsdatenpakete und Frequenzkorrekturdatenpakete von benachbarten Basisstationen empfangen, während die Empfangseinheit 1 gemäß der zweiten Variante der vorliegenden Erfindung Synchronisationsdatenpakete, Frequenzkorrekturdatenpakete und außerdem Normaldatenpakete von den benachbarten Basisstationen empfangen kann. Die Steuervorrichtung 2 kann die Empfangseinheit 1 während den dem Empfang der entsprechenden Datenpakete zugeordneten Zeitrahmen auf Empfang schalten. Da beispielsweise im GSM-System die Frequenzkorrekturdatenpakete einen Zeitrahmen vor den Synchronisationsdatenpaketen von den Basisstationen ausgesendet werden, braucht die Steuervorrichtung 2 die Empfangseinheit 1 zu Zeiten, an denen sicher keine Synchronisationsdatenpakete empfangen werden können, nicht auf Empfang zu schalten. Empfängt die Empfangseinheit 1 während einem zugeordneten Zeitrahmen weder Frequenzkorrekturdatenpakete noch Synchronisationsdatenpakete, so braucht die Empfangseinheit 1 im Empfangsbereitschaftszustand der Mobilstation im unmittelbar darauf folgenden Zeitrahmen nicht eingeschaltet zu werden, bzw. zu bleiben, da in diesem nächsten Zeitrahmen kein Synchronisationsdatenpaket zu erwarten ist. Im Gesprächszustand der Mobilstation betrifft das den übernächsten zugeordneten Zeitrahmen. Im Gesprächszustand der Mobilstation wird alle 26 Zeitrahmen im Idle-Zeitrahmen die Empfangseinheit 1 auf den Empfang von Datenpaketen von der benachbarten Basisstation geschaltet. Da die Wiederholungsperiode der Synchronisationsdatenpakete von den Basisstationen 51 Zeitrahmen beträgt, ist somit, wenn die Empfangseinheit in einem Zeitrahmen kein Frequenzkorrekturdatenpaket empfängt, (51+1=) 52 Zeitrahmen später kein Synchronisationsdatenpaket von der gleichen Basisstation zu erwarten. Damit braucht die Steuervorrichtung 2 die Empfangseinheit 1 im übernächsten zugeordneten Zeitrahmen (dem übernächsten Idle-Zeitrahmen) nicht auf den Empfang von Synchronisationsdatenpaketen und Frequenzkorrekturdatenpaketen von der gleichen Basisstation zu schalten.

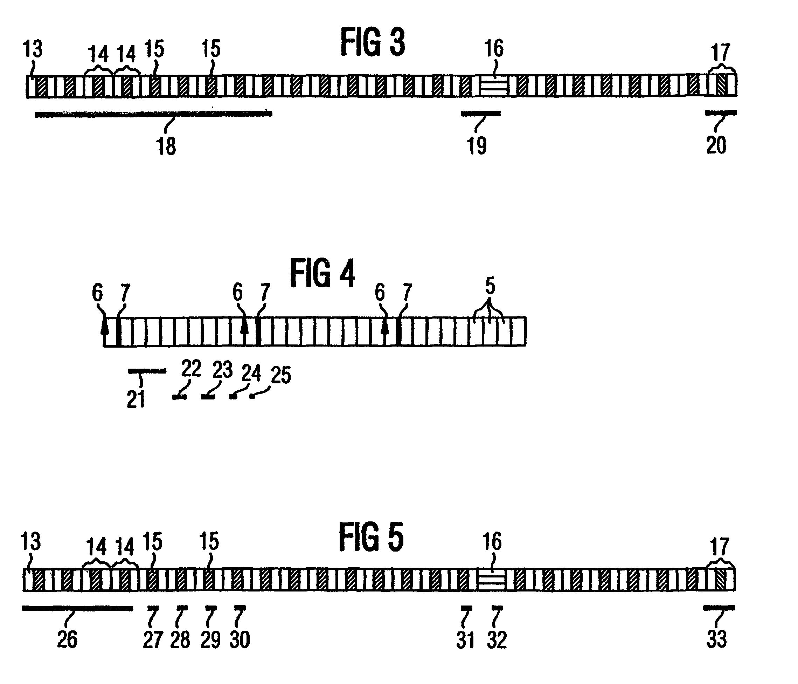

Diese erste Variante der vorliegenden Erfindung ist in den Fig. 2 und 3 näher erläutert. In der zweiten Variante der vorliegenden Erfindung steuert die Steuereinheit 2 die Empfangseinheit 1 dergestalt, daß die Empfangseinheit 1 auf das Zeitschlitzraster der jeweiligen benachbarten Basisstation synchronisiert wird und nur während bestimmter Zeitabschnitte auf Empfang von Datenpaketen von dieser benachbarten Basisstation geschaltet wird. Die bestimmten Zeitabschnitte entsprechen der Lage der Trainingssequenzen der Normaldatenpakete von der Basisstation, da die Datenpakete der Basisstation anhand der Trainingssequenzen bzw. der entsprechenden sich an der Position der Trainingssequenzen der Normaldatenpakete befindenden Bitfolgen leicht unterschieden werden können. Ein Frequenzkorrekturdatenpaket besteht aus einer Folge von ausschließlich "1", und ein Synchron-isationsdatenpaket weist eine etwas längere und unterschiedliche Trainingssequenz wie die Normaldatenpakete auf. Es genügt somit, die Empfangseinheit 1 nur während der Zeitabschnitte einzuschalten, die den Trainingssequenzen der Normaldatenpakete entsprechen, um in ausreichend genauer Weise Normaldatenpakete, Frequenzkorrekturdatenpakete und Synchronisationsdatenpakete empfangen und voneinander unterscheiden zu können. Dabei können im Idealfall zwei Bits der Trainingssequenz der Normaldatenpakete zur Unterscheidung von den Frequenzkorrekturdatenpaketen und den Synchronisationsdatenpaketen ausreichen. Werden mehr als 2 Bits verglichen, so funktioniert das Verfahren auch bei fehlerhaften (verrauschten) Signalen. Die Steuervorrichtung 2 muß dabei am Anfang eines zugeordneten Zeitrahmens zumindest ein Normaldatenpaket, das von der Empfangseinheit 1 empfangen wurde, auswerten, um die Lage der Trainingssequenz zu bestimmen. Da die Trainingssequenzen der Normaldatenpakete von den Basisstationen in bis zu neun verschiedenen Variationen auftreten können, ist es vorteilhaft, in der erfindungsgemäßen Mobilstation einen Speicher 3 vorzusehen, in dem alle möglichen zu erwartenden Trainingssequenzen gespeichert sind. Die Steuereinrichtung 2 kann dann beim Auswerten der Trainingssequenz eines von der Empfangseinheit 1 empfangenen Normaldatenpaketes die möglichen Trainingssequenzen mit der empfangenen Trainingssequenz vergleichen und feststellen, ob eine Trainingssequenz eines Normaldatenpaketes vorliegt und wie ihre genaue Lage ist. Dabei steigt die Genauigkeit, wenn die Empfangseinheit 1 mehrere Normaldatenpakete empfängt und die Steuervorrichtung 2 folglich mehrere Normaldatenpakete bzw. deren Trainingssequenzen auswerten kann. Das ist insbesondere deshalb von Vorteil, da die Normaldatenpakete im Verhältnis zu den Frequenzkorrekturdatenpaketen und Synchronisationsdatenpaketen nur eine vergleichsweise kurze Trainingssequenz enthalten, welche daher auch irrtümlicherweise in den neben der Trainingssequenz übertragenen Datenbits detektiert werden kann. Durch Vergleich der empfangenen Trainingssequenz mit den erwarteten Trainingssequenzen wird daher vermieden, daß eine empfangene Bitfolge fälschlicherweise als Trainingssequenz erkannt wird und die Empfangseinheit 1 von der Steuervorrichtung 2 entsprechend falsch synchronisiert wird. Da die Empfangseinheit 1 nur während bestimmten Zeitabschnitten auf Empfang geschaltet wird, wird einerseits Rechenaufwand bei der Suche und Auswertung der Frequenzkorrekturdatenpakete und Synchronisationsdatenpakete eingespart, andererseits wird durch Ausschalten bzw. Nichteinschalten der Empfangseinheit 1 zwischen den Trainingssequenzen erheblich Strom gespart. Diese zweite Variante der vorliegenden Erfindung ist in den Fig. 4 und 5 näher erläutert. Dabei ist in den Fig. 4 und 5 auch die Kombination der beiden erfindungsgemäßen Varianten erklärt.

Beispielsweise werden für den Fall, daß die Steuervorrichtung 2 eine relativ langsame Signalverarbeitung hat und somit eine Auswertung und damit die Steuerung der Empfangseinheit 1 zum Empfang der Datenpakete von der jeweiligen benachbarten Basisstation nicht in Echtzeit möglich ist, die von der Empfangseinheit 1 von der jeweiligen Basisstation empfangenen Datenpakete vorteilhafterweise in einen Speicher 4 abgelegt. Die Steuervorrichtung 2 kann dann nach den zugeordneten Zeitrahmen die Auswertung der empfangenen Datenpakete vornehmen. Wenn dabei die Auswertung länger dauert als die Zeit, in der die Nachbarkanalsuche unterbrochen ist, wird die Suche beispielsweise im Gesprächszustand der Mobilstation 51 Zeitrahmen später fortgesetzt. Hierdurch hat die Steuervorrichtung 2 ausreichend Zeit zur Auswertung der im Speicher 4 abgelegten Datenpakete. Der Speicher 4 muß ca. 9 Zeitschlitze aufnehmen können. Da beispielsweise im Empfangsbereitschaftszustand der Mobilstation der sogenannte Deinterleaving-Speicher nicht verwendet wird, könnte dieser Speicher in einer GSM-Mobilstation zum Zwischenspeichern der Datenpakete verwendet werden.

In den Fig. 2 bis 5 sind die erste und die zweite Variante der vorliegenden Erfindung näher erläutert. Dabei wird in den Figuren ausschließlich auf den Empfangsbereitschaftszustand der Mobilstation bezug genommen, in dem für die Suche nach Datenpaketen einer benachbarten Basisstation jeweils mehrere unmittelbar aufeinanderfolgende Zeitrahmen zugeordnet werden. Für eine sich im Gesprächszustand befindende Mobilstation gelten die Figuren 3 bis 5 entsprechend. Im Gesprächszustand der Mobilstation werden zwar keine unmittelbar aufeinanderfolgenden Zeitrahmen für den Empfang von Datenpaketen von jeweils benachbarten Basisstationen zugeordnet, sondern jeweils mit einer bestimmten festen Periode voneinander beabstandete Zeitrahmen (beispielsweise im GSM-Standard jeweils alle 26 Zeitrahmen ein Idle-Zeitrahmen) jedoch gilt wegen der wiederholperiode der Synchronisationsdatenpakete und Frequenzkorrekturdatenpakete von 51 Zeitrahmen (jeweils 4 Datenpaketpaare mit einer Periode von 10 Zeitrahmen und ein Datenpaketpaar mit einer Periode von 11 Zeitrahmen) das gleiche wie für den Empfangsbereitschaftszustand der Mobilstation. Das liegt daran, daß die Periode von 26 Zeitrahmen (Idle-Zeitrahmen) und die Periode von 51 Zeitrahmen keinen gemeinsamen Teiler haben und somit eine zyklische Verschiebung der beiden Zeitrahmenperioden stattfindet, so daß nach 11 mal 26 Zeitrahmen ein Empfang der gesuchten Datenpakete von der jeweiligen Basisstation erfolgt, falls die Mobilstation nicht zu weit von der jeweiligen benachbarten Basisstation entfernt ist oder zu starke Störungen bei der Übertragung auftreten.

In Fig. 2 ist ein Zeitrahmenraster von durch die Basisstation ausgesendeten Datenpaketen dargestellt. Im GSM-Standard enthält jeder Zeitrahmen 5, acht Zeitschlitze. Die von den Basisstationen ausgesendeten Datenpakete, wie z.B. Synchronisationsdatenpakete, Frequenzkorrekturdatenpakete und Normaldatenpakete gehorchen alle dem gleichen Zeitraster. Wie oben erwähnt wurde, werden von den Basisstationen 4 mal alle 10 Zeitrahmen und daraufhin nach 11 Zeitrahmen (insgesamt 51 Zeitrahmen) ein Frequenzkorrekturdatenpaket 6 und jeweils einen Zeitrahmen später ein Synchronisationsdatenpaket 7 ausgesendet. Bei aus dem Stand der Technik bekannten Verfahren und Vorrichtungen wird, wie durch die mehreren Zeitrahmen 8 unter dem Zeitrahmenraster verdeutlicht wird, die Empfangseinheit kontinuierlich eingeschaltet (im Empfangsbereitschaftszustand der Mobilstation), um das Synchronisationsdatenpaket zu empfangen und auszuwerten.

In der ersten Variante der vorliegenden Erfindung wird die Empfangseinheit der Mobilstation abgeschaltet, wenn sie in einem Zeitrahmen weder ein Frequenzkorrekturdatenpaket noch ein Synchronisationsdatenpaket empfängt. Dies ist durch die Zeitrahmen 9, 10 ... verdeutlicht. In einem ersten einer benachbarten Basisstation zugeordneten Zeitrahmen 9 ist die Empfangseinheit auf den Empfang der Datenpakete geschaltet. Da sie weder ein Frequenzkorrektur- noch ein Synchronisationsdatenpaket empfängt, wird die Empfangseinheit im darauffolgenden Zeitrahmen abgeschaltet. Im übernächsten Zeitrahmen 10 wird die Empfangseinheit wieder auf den Empfang geschaltet. Das wiederholt sich, bis die Empfangseinheit in einem Zeitrahmen 11 ein Frequenzkorrekturdatenpaket empfängt. Die Steuereinheit weiß daraufhin, daß ein Synchronisationsdatenpaket einen Zeitrahmen später folgen muß. Daraufhin wird die Empfangseinheit für den dazwischenliegenden Zeitrahmen nicht auf Empfang geschaltet und wieder auf Empfang geschaltet, wenn das Synchronisationsdatenpaket auftritt.

In Fig. 3 ist ein genaueres Zeitschlitzraster 13 mit einer Vielzahl aufeinanderfolgender Zeitschlitze beispielsweise des GSM-Standards. Die Zeitschlitze 14 sind Normaldatenpakete und weisen jeweils in der Mitte des Zeitschlitzes eine Trainingssequenz 15 auf. Der Zeitschlitz 16 ist ein Frequenzkorrekturdatenpaket und der Zeitschlitz 17 ist ein Synchronisationsdatenpaket. Das Frequenzkorrekturdatenpaket besteht aus einer Reihe identischer Datenbits und das Synchronisationsdatenpaket 17 weist in seiner Mitte ähnlich wie die Normaldatenpakete eine Trainingssequenz auf, die sich jedoch von den Trainingssequenzen der Normaldatenpakete unterscheidet.

Empfängt die Empfangseinheit der Mobilstation während eines Zeitrahmens 18 weder ein Frequenzkorrektur- noch ein Synchronisationsdatenpaket, so wird die Empfangseinheit während einem Zeitraum von 8 Zeitschlitzen bzw. einem Zeitrahmen nicht auf den Empfang von Datenpaketen von der jeweiligen benachbarten Basisstation geschaltet. Nach einem Zeitrahmen wird sie wieder eingeschaltet und fährt mit der Suche fort, was durch die Zeitschlitze 19 verdeutlicht wird. Empfängt die Empfangseinheit ein Frequenzkorrekturdatenpaket 16, so wird sie abgeschaltet und während dem darauffolgenden Zeitrahmen nicht wieder auf Empfang geschaltet, da das dem Frequenzkorrekturdatenpaket 16 folgende Synchronisationsdatenpaket 17 immer um eine Zeitrahmenlänge später folgt. Die Empfangseinheit wird also einen Zeitrahmen später wieder auf Empfang geschaltet, was durch den Zeitschlitz 20 verdeutlicht ist, und empfängt das Synchronisationsdatenpaket. Wird während des Zeitschlitzes 19 ein Synchronisationsdatenpaket empfangen, so steht die benötigte Information unmittelbar zur Verfügung.

In Bild 4 ist ein Zeitrahmenraster mit einer Vielzahl von Zeitrahmen 5 dargestellt, um die zweite Variante der Erfindung zu verdeutlichen. Ein Frequenzkorrekturdatenpaket 6 wird einen Zeitrahmen später von einem Synchronisationsdatenpaket 7 gefolgt, wobei jedes Datenpaketpaar jeweils um 10 Zeitrahmen auseinanderliegt. Nach 4 jeweils um 10 Zeitrahmen auseinanderliegenden Datenpaketpaaren ist das nächste Datenpaketpaar um 11 Zeitrahmen entfernt (insgesamt 51 Zeitrahmen, GSM-Standard). Die Empfangseinheit wird gemäß der zweiten Variante der vorliegenden Erfindung während mehrerer Zeitschlitze 31 auf den Empfang von Frequenzkorrekturdatenpaketen, Synchronisationsdatenpaketen und Normaldatenpaketen geschaltet. Mittels der Normaldatenpakete bzw. derer Trainingssequenzen wird die Empfangseinheit auf das Zeitschlitzraster synchronisiert und danach nur jeweils während der Zeitabschnitte auf Empfang geschaltet, die der Lage der Trainingssequenzen in den Normaldatenpaketen entsprechen. Die Zeitrahmen 22 und 23 in der Fig. 4 sind zu grob, um diese Suche nur jeweils in der Mitte der Zeitschlitze zu verdeutlichen. Die Balken 22 und 23 in der Fig. 4 entsprechen den Zeitrahmen 9 und 10 in der Fig. 2, bei denen die Empfangseinheit jeweils für einen Zeitrahmen auf Empfang geschaltet wird und, wenn sie weder ein Frequenzkorrektur- noch ein Synchronisationsdatenpaket empfängt, während dem nächsten Zeitrahmen nicht auf Empfang geschaltet wird. Innerhalb der Zeitrahmen 22 und 23 wird die Empfangseinheit jeweils nur in der Mitte der Zeitschlitze eingeschaltet, wie in der Figur 5 detailliert erläutert ist. Die Fig. 5 zeigt ein Zeitschlitzraster 13 mit mehreren aufeinanderfolgenden Normaldatenpaketen 14 die jeweils eine Trainingssequenz 15 in der Mitte des Datenpaketes aufweisen. Der Zeitschlitz 16 ist ein Frequenzkorrekturdatenpaket und der Zeitschlitz 17 ist ein Synchronisationsdatenpaket. Das Synchronisationsdatenpaket 17 weist in seiner Mitte ebenfalls eine Trainingssequenz auf, die sich jedoch von den Trainingssequenzen der Normaldatenpakete unterscheidet.

Während mehrerer Zeitschlitze wird die Empfangseinheit kontinuierlich auf den Empfang der Datenpakete von der jeweiligen benachbarten Basisstation geschaltet, wie durch die Zeitschlitze 26 verdeutlicht ist. Während dieser Zeit wird die Empfangseinheit von der Steuereinheit auf das Zeitschlitzraster der jeweiligen benachbarten Basisstation synchronisiert und, wenn das erfolgt ist, nur noch in Zeiträumen eingeschaltet, die der Lage der Trainingssequenzen in den Normaldatenpaketen entsprechen, wie durch die Zeitschlitzteile 27, 28, 29 und 30 verdeutlicht ist. Im gezeigten Beispiel wird die Empfangseinheit während 4 Zeitschlitzen auf das Zeitschlitzraster der jeweiligen benachbarten Basisstation synchronisiert, woraufhin die Empfangseinheit in den folgenden 4 Zeitschlitzen nur jeweils während der Trainingssequenz auf Empfang geschaltet wird. Falls die Empfangseinheit während einem Zeitrahmen weder Frequenzkorrektur- noch Synchronisationsdatenpakete empfangen hat, so wird sie im nächsten Zeitrahmen ausgeschaltet, da kein Synchronisationsdatenpaket zu erwarten ist. Dieses Vorgehen entspricht der ersten Variante der vorliegenden Erfindung, die in den Figuren 2 und 3 dargestellt ist. Die Fig. 4 und 5 zeigen somit eine Kombination der ersten und der zweiten Variante der vorliegenden Erfindung.

Die Empfangseinheit wird nach dem Zeitschlitzteil 30, in dem sie weder ein Frequenzkorrekturdatenpaket noch ein Synchronisationsdatenpaket empfangen hat, während einem Zeitrahmen, d.h. 8 Zeitschlitzen nicht auf Empfang von Datenpaketen von der entsprechenden Basisstation geschaltet. Beim Zeitschlitzteil 31 wird die Empfangseinheit wieder auf Empfang geschaltet, wobei sie wiederum nur während einer kurzen Zeitdauer auf den Empfang der Datenpakete geschaltet wird. Im nächsten Zeitschlitzteil empfängt die Empfangseinheit ein Frequenzkorrekturdatenpaket und weiß somit, daß einen Zeitrahmen später ein Synchronisationsdatenpaket 17 folgen wird. Die Empfangseinheit bleibt somit in dem Zeitrahmen nach dem Frequenzkorrekturdatenpaket 16 ausgeschaltet und wird erst wieder beim Synchronisationsdatenpaket 17 eingeschaltet, jedoch nicht nur während dem der Trainingssequenz entsprechenden Zeitraum, sondern über den gesamten Zeitschlitz 33 des Synchronisationsdatenpaketes. In einer weiteren, nicht in den Figuren dargestellten Verfeinerung der zweiten Variante der vorliegenden Erfindung kann die Empfangseinheit nur während eines Teiles des Zeitraums, der einer Trainingssequenz in den Normaldatenpaketen entspricht, eingeschaltet werden, solange dieser Teil bzw. die in ihm detektierten Bitfolgen zur Unterscheidung der Synchronisations-, Frequenzkorrektur- und Normaldatenpakete ausreicht. Im Extremfall reichen dazu zwei Bits aus, solange sich die verschiedenen Datenpakete noch unterscheiden lassen. Steht jedoch der Zeitpunkt fest, zu dem ein Synchronisationsdatenpaket ankommt, so wird wie auch bei der zweiten Variante während des Zeitschlitzes, in dem das Synchronisationsdatenpaket empfangen wird, über die gesamte Länge des Zeitschlitzes empfangen, um die gesamten Daten des Synchronisationsdatenpaketes auswerten zu können.

## Patentansprüche

1. Verfahren zur Steuerung des Empfangs von Datenpaketen in einer Empfangseinheit (1) einer Mobilstation eines Mobilfunksystems, bei dem die Empfangseinheit (1) jeweils während vorgegebener Zeitrahmen auf den Empfang von zu detektierenden Datenpaketen von Basisstationen geschaltet werden kann, wobei mehrere vorgegebene Zeitrahmen jeweils dem Empfang von Datenpaketen einer bestimmten Basisstation zugeordnet sind und die Basisstationen in einem vorgegebenen Zeitabstand vor den zu detektierenden Datenpaketen charakteristische Datenpakete aussenden,
**dadurch gekennzeichnet,**
**daß** die Empfangseinheit (1) während der vorgegebenen Zeitrahmen, in denen sie auf den Empfang von zu detektierenden Datenpaketen (7) geschaltet wird, auch auf den Empfang-von charakteristischen Datenpaketen (6) der jeweiligen Basisstation geschaltet wird, und
**daß** die Empfangseinheit (1), wenn sie in einem vorgegebenen Zeitrahmen weder ein zu detektierendes Datenpaket (7) noch ein charakteristisches Datenpaket (6) von der jeweiligen Basisstation empfängt, während einem der nächsten vorgegebenen Zeitrahmen, der dieser Basisstation zugeordnet ist und in dem kein zu detektierendes Datenpaket von dieser Basisstation auftreten kann, nicht auf den Empfang von Datenpaketen von dieser Basisstation geschaltet wird.

2. Verfahren zur Steuerung des Empfangs von Datenpaketen in einer Empfangseinheit (1) einer Mobilstation eines Mobilfunksystems, bei dem die Empfangseinheit (1) jeweils während vorgegebener Zeit zu detektierenden Datenpaketen von Basisstationen geschaltet werden kann, wobei mehrere vorgegebene Zeitrahmen jeweils dem Empfang von Datenpaketen einer bestimmten Basisstation zugeordnet sind und die Basisstationen in einem vorgegebenen Zeitabstand vor den zu detektierenden Datenpaketen charakteristische Datenpakete aussenden,
**dadurch gekennzeichnet,**
**daß** die Empfangseinheit (1) während der vorgegebenen Zeitrahmen, in denen sie auf den Empfang von zu detektierenden Datenpaketen (7) geschaltet wird, auch auf den Empfang von charakteristischen Datenpaketen (6) und Normaldatenpaketen (14) von der jeweiligen Basisstation geschaltet wird, wobei die Normaldatenpakete jeweils eine Trainingssequenz aufweisen, und daß die Empfangseinheit (1) jeweils am Anfang eines einer bestimmten Basisstation zugeordneten Zeitrahmens zumindest ein Normaldatenpaket (14) von der jeweiligen Basisstation empfängt, um die Lage der Trainingssequenz (15) in den Normaldatenpaketen (14) der jeweiligen Basisstation zu bestimmen, woraufhin die Empfangseinheit (1) in den der jeweiligen Basisstation zugeordneten Zeitrahmen nur während den den Trainingssequenzen (15) der Normaldatenpakete (14) entsprechenden Zeiten auf Empfang von Datenpaketen von der jeweiligen Basisstation geschaltet wird.

3. Verfahren nach Anspruch 1,
**dadurch gekennzeichnet,**
**daß** die Empfangseinheit (1) während der vorgegebenen Zeitrahmen, in denen sie auf den Empfang von zu detektierenden Datenpaketen (7) und von charakteristischen Datenpaketen (6) geschaltet wird, auch auf den Empfang von Normaldatenpaketen (14) von der jeweiligen Basisstation geschaltet wird, wobei die Normaldatenpakete (14) jeweils eine Trainingssequenz (15) aufweisen,
und **daß** die Empfangseinheit (1) jeweils am Anfang eines einer bestimmten Basisstation zugeordneten Zeitrahmens zumindest ein Normaldatenpaket (14) von der jeweiligen Basisstation empfängt, um die Lage der Trainingssequenz (15) in den Normaldatenpaketen (14) der jeweiligen Basisstation zu bestimmen, woraufhin die Empfangseinheit (1) in den der jeweiligen Basisstation zugeordneten Zeitrahmen nur während den den Trainingssequenzen (15) der Normaldatenpakete (14) entsprechenden Zeiträumen auf Empfang von Datenpaketen von der jeweiligen Basisstation geschaltet wird.

4. Verfahren nach Anspruch 2 oder 3
**dadurch gekennzeichnet,**
**daß** die Empfangseinheit (1) in den der jeweiligen Basisstation zugeordneten Zeitrahmen nur in einem Teil der den Trainingssequenzen (15) der Normaldatenpakete (14) entsprechenden Zeiträumen auf Empfang von Datenpaketen von der jeweiligen benachbarten Basisstation geschaltet wird, wobei der Teil der Zeiträume dergestalt festgelegt ist, daß die in ihm enthaltenen Daten zur Unterscheidung der verschiedenen Arten von Datenpaketen ausreicht.

5. Verfahren nach Anspruch 2, 3 oder 4,
**dadurch gekennzeichnet,**
**daß** die genaue Lage der Trainingssequenz (15) in den Normaldatenpaketen (14) durch Vergleich der Trainingssequenz (15) des zumindest einen empfangenen Normaldatenpaketes (14) mit in einem Speicher (3) der Mobilstation gespeicherten möglichen Trainingssequenzen bestimmt wird.

6. Verfahren nach einem der vorhergehenden Ansprüche,
**dadurch gekennzeichnet,**
**daß**, wenn die Empfangseinheit (1) in einem vorgegebenen Zeitrahmen ein charakteristisches Datenpaket (6) von der jeweiligen Basisstation empfängt, die Empfangseinheit erst wieder bei dem durch den vorgegebenen Zeitabstand der zu detektierenden Datenpakete (7) von den charakteristischen Datenpaketen (6) festgelegten Zeitpunkt auf den Empfang von Datenpaketen von dieser Basisstation geschaltet wird.

7. Verfahren nach einem der vorhergehenden Ansprüche,
**dadurch gekennzeichnet,**
**daß** die Empfangseinheit (1), wenn sie während einem der nächsten vorgegebenen Zeitrahmen nicht auf den Empfang von zu detektierenden(7) und charakteristischen Datenpaketen (6) von der jeweiligen Basisstation geschaltet wird, auf den Empfang von Datenpaketen von einer anderen Basisstation geschaltet wird.

8. Verfahren nach einem der vorhergehenden Ansprüche
**dadurch gekennzeichnet,**
**daß** die von der Empfangseinheit (1) in einem vorgegebenen Zeitraum von einer jeweiligen benachbarten Basisstation empfangenen Datenpakete in einem Speicher (4) gespeichert und nach dem vorgegebenen Zeitraum ausgewertet werden.

9. Verfahren nach einem der vorhergehenden Ansprüche,
**dadurch gekennzeichnet,**
**daß** das Mobilfunksystem ein GSM-System ist und die zu detektierenden Datenpakte Synchronisationsdatenpakte und die charakteristischen Datenpakete Frequenzkorrekturdatenpakete sind.

10. Mobilstation eines Mobilfunksystems, mit einer Steuervorrichtung (2) zur Steuerung des Empfangs von Datenpaketen in einer Empfangseinheit (1) der Mobilstation, wobei die Steuervorrichtung derart eingerichtet ist, dass die Empfangseinheit (1) jeweils während vorgegebener Zeitrahmen auf den Empfang von zu detektierenden Datenpaketen von Basisstationen geschaltet wird, wobei mehrere vorgegebene Zeitrahmen jeweils dem Empfang von Datenpaketen einer bestimmten Basisstation zugeordnet sind und die Basisstationen in einem vorgegebenen Zeitabstand vor den zu detektierenden Datenpaketen charakteristischen Datenpakete aussenden,
**dadurch gekennzeichnet,**
**dass** die Steuervorrichtung (2) derart eingerichtet ist, dass die Empfangseinheit (1) während der vorgegebenen Zeitrahmen, in denen sie auf den Empfang von zu detektierenden Datenpaketen (7) geschaltet wird, auch auf den Empfang von charakteristischen Datenpaketen (6) der jeweiligen Basisstation geschaltet wird, und die Empfangseinheit (1), wenn sie in einem vorgegebenen Zeitrahmen weder ein zu detektierendes Datenpaket (7) noch ein charakteristisches Datenpaket (6) von der jeweiligen Basisstation empfängt, während einem der nächsten vorgegebenen Zeitrahmen, der dieser Basisstation zugeordnet ist und in dem kein zu detektierendes Datenpaket von dieser Basisstation auftreten kann, nicht auf den Empfang von Datenpaketen von dieser Basisstation geschaltet wird.

11. Mobilstation eines Mobilfunksystems mit einer Steuervorrichtung (2) zur Steuerung des Empfangs von Datenpaketen in einer Empfangseinheit (1) der Mobilstation, wobei die Steuervorrichtung derart eingerichtet ist, dass die Empfangseinheit (1) jeweils während vorgegebener Zeitrahmen auf den Empfang von zu detektierenden Datenpaketen von Basisstationen geschaltet wird, wobei mehrere vorgegebene Zeitrahmen jeweils dem Empfang von Datenpaketen einer bestimmten Basisstation zugeordnet sind und die Basisstationen in einem vorgegebenen Zeitabstand vor den zu detektierenden Datenpaketen charakteristische Datenpakete aussenden,
**dadurch gekennzeichnet,**
**dass** die Steuervorrichtung (2) derart eingerichtet ist,
**dass** die Empfangseinheit (1) während der vorgegebenen Zeitrahmen, in denen diese auf den Empfang von zu detektierenden Datenpaketen (7) geschaltet wird, auch auf den Empfang von charakteristischen Datenpaketen (6) und Normaldatenpaketen (14) von der jeweiligen Mobilstationen geschaltet wird, wobei die Normaldatenpakete (14) jeweils eine Trainingssequenz (15) aufweisen, und
**dass** die Empfangseinheit (1) jeweils am Anfang eines einer bestimmten Basisstation zugeordneten Zeitrahmens zumindest ein Normaldatenpaket (14) von der jeweiligen Basisstation empfängt, aus dem die Steuervorrichtung (2) die Lage der Trainingssequenz (15) in den Normaldatenpaketen (14) der jeweiligen Basisstation bestimmt und die Empfangseinheit (1) in den der jeweiligen Basisstation zugeordneten Zeitrahmen nur während den den Trainingssequenzen (15) der Normaldatenpakete (14) entsprechenden Zeiten auf Empfang von Datenpaketen von der jeweiligen Basisstation geschaltet wird.

12. Mobilstation nach Anspruch 10,
**dadurch gekennzeichnet,**
**dass** die Steuervorrichtung (2) derart eingerichtet ist, dass die Empfangseinheit (1) während der vorgegebenen Zeitrahmen, in denen diese auf den Empfang von zu detektierenden Datenpaketen (7) und von charakteristischen Datenpaketen (6) geschaltet wird, auch auf den Empfang von Normaldatenpaketen (14) von der jeweiligen Mobilstationen geschaltet wird, wobei die Normaldatenpakete (14) jeweils eine Trainingssequenz (15) aufweisen,
und **dass** die Empfangseinheit (1) jeweils am Anfang eines einer bestimmten Basisstation zugeordneten Zeitrahmens zumindest ein Normaldatenpaket (14) von der jeweiligen Basisstation empfängt, aus dem die Steuervorrichtung (2) die Lage der Trainingssequenz (15) in den Normaldatenpaketen (14) der jeweiligen Basisstation bestimmt und die Empfangseinheit (1) in den der jeweiligen Basisstation zugeordneten Zeitrahmen nur während den den Trainingssequenzen der Normaldatenpakete (14) entsprechenden Zeiträumen auf Empfang von Datenpaketen von der jeweiligen Basisstation geschaltet wird.

13. Mobilstation nach Anspruch 11,
**dadurch gekennzeichnet,**
**dass** die Steuervorrichtung (2) derart eingerichtet ist, dass die Empfangseinheit (1) in den der jeweiligen Basisstation zugeordneten Zeitrahmen nur in einem Teil der den Trainingssequenzen (15) der Normaldatenpakete (14) entsprechenden Zeiträumen auf Empfang von Datenpaketen von der jeweiligen Basisstation geschaltet wird, wobei der Teil der Zeiträume dergestalt festgelegt ist, dass die in ihm enthaltenen Daten zur Unterscheidung der verschiedenen Arten von Datenpaketen ausreicht.

14. Mobilstation nach Anspruch 10, 11 oder 12,
**dadurch gekennzeichnet,**
**dass** die Steuervorrichtung (2) derart eingerichtet ist, dass die genaue Lage der Trainingssequenz (15) in den Normaldatenpaketen (14) durch Vergleich der Trainingssequenz des zumindest einen empfangenen Normaldatenpaketes (14) mit in einem Speicher (3) der Mobilstation gespeicherten möglichen Trainingssequenzen bestimmt wird.

15. Mobilstation nach einem der Ansprüche 10 bis 14,
**dadurch gekennzeichnet,**
**dass** wenn die Empfangseinheit (1) in einem vorgegebenen Zeitrahmen ein Frequenzkorrekturdatenpaket (6) von der jeweiligen Basisstation empfängt, die Steuervorrichtung (2) die Empfangseinheit (1) erst wieder bei dem durch den vorgegebenen Zeitabstand der Synchronisationsdatenpakete (7) von den Frequenzkorrekturdatenpaketen (6) festgelegten Zeitpunkt auf den Empfang von Datenpaketen von dieser Basisstation geschaltet wird.

16. Mobilstation nach einem der Ansprüche 10 bis 15,
**dadurch gekennzeichnet,**
**dass** die Steuervorrichtung (2) derart eingerichtet ist, dass die Empfangseinheit (1), wenn diese während einem der nächsten vorgegebenen Zeitrahmen nicht auf den Empfang von Datenpaketen von der jeweiligen Basisstation geschaltet wird, auf den Empfang von Datenpaketen von einer anderen Basisstation geschaltet wird.

17. Mobilstation nach einem der Ansprüche 10 bis 16,
**dadurch gekennzeichnet,**
**dass** die von der Empfangseinheit (1) in einem vorgegebenen Zeitraum von einer jeweiligen Basisstation empfangenen Datenpakete in einem Speicher (4) gespeichert und nach dem vorgegebenen Zeitraum von der Steuervorrichtung (2) ausgewertet werden.

18. Mobilstation nach einem der Ansprüche 10 bis 17,
**dadurch gekennzeichnet,**
**dass** das Mobilfunksystem ein GSM-System ist und die zu detektierenden Datenpakte Synchronisationsdatenpakete und die charakteristischen Datenpakete Frequenzkorrekturdatenpakete sind.

## Claims

1. Method for controlling the reception of data packets in a receiving unit (1) of a mobile station in a mobile radio system, in which the receiving unit (1) can in each case be switched for predetermined time frames to reception of data packets which are to be detected from base stations, in which case a plurality of predetermined time frames are each assigned to reception of data packets from a specific base station, and the base stations transmit characteristic data packets at a predetermined time interval before the data packets to be detected,
**characterized**
**in that** the receiving unit (1) is also switched to reception of characteristic data packets (6) from the respective base station during the predetermined time frames in which it is switched to reception of data packets (7) to be detected, and
**in that**, if it does not receive either a data packet (7) to be detected or a characteristic data packet (6) from the respective base station in a predetermined time frame, the receiving unit (1) is not switched to reception of data packets from this base station during one of the next predetermined time frames which is assigned to this base station and in which no data packet to be detected from this base station can occur.

2. Method for controlling the reception of data packets in a receiving unit (1) of a mobile station in a mobile radio system, in which the receiving unit (1) can in each case be switched for predetermined time (lacuna] data. packets which are to be detected from base stations, in which case a plurality of predetermined time frames are each assigned to reception of data packets from a specific base station, and the base stations transmit characteristic data packets at a predetermined time interval before the data packets to be detected,
**characterized**
**in that** the receiving unit (1) is also switched to reception of characteristic data packets (6) and normal data packets (14) from the respective base station during the predetermined time frames in which it is switched to reception of data packets (7) to be detected, in which case the normal data packets each have a training sequence,
and **in that** the receiving unit (1) in each case receives at least one normal data packet (14) from the respective base station at the start of a time frame which is assigned to a specific base station, in order to determine the position of the training sequence (15) in the normal data packets (14) from the respective base station, at which point the receiving unit (1) is switched to reception of data packets from the respective base station only during those times which correspond to the training sequences (15) of the normal data packets (14) in the time frames which are assigned to the respective base station.

3. Method according to Claim 1,
**characterized**
**in that**, during the predetermined time frames in which it is switched to reception of data packets (7) to be detected and characteristic data packets (6), the receiving unit (1) is also switched to reception of normal data packets (14) from the respective base station, in which case the normal data packets (14) each have a training sequence (15),
and **in that** the receiving unit (1) in each case receives at least one normal data packet (14) from the respective. base station at the start of a time frame which is assigned to a specific base station, in order to determine the position of the training sequence (15) in the normal data packets (14) of the respective base station, at which point the receiving unit (1) is switched to reception of data packets from the respective base station only during those time periods which correspond to the training sequences (15) of the normal data packets (14) in the time frames which are assigned to the respective base station.

4. Method according to Claim 2 or 3,
**characterized**
**in that** the receiving unit (1) is switched to reception of data packets from the respective adjacent base station only in a portion of the time periods which correspond to the training sequences (15) of the normal data packets (14) in the time frames which are assigned to the respective base station, in which case the portion of the time periods is defined in such a manner that the data contained in this portion is sufficient to distinguish the various types of data packets.

5. Method according to Claim 2, 3 or 4,
**characterized**
**in that** the exact position of the training sequence (15) in the normal data packets (14) is determined by comparison of the training sequence (15) in the at least one received normal data packet (14) with possible training sequences which are stored in a memory (3) in the mobile station.

6. Method according to one of the preceding claims,
**characterized**
**in that**, if the receiving unit (1) receives a characteristic data packet (6) from the respective base station in a predetermined time frame, the receiving unit is not switched back to reception of data packets from this base station until the time defined by the predetermined time interval between the data packets (7) to be detected and the characteristic data packets (6) .

7. Method according to one of the preceding claims,
**characterized**
**in that**, if it is not switched to reception of data packets (7) to be detected and characteristic data packets (6) from the respective base station during one of the next predetermined time frames, the receiving unit (1) is switched to reception of data packets from another base station.

8. Method according to one of the preceding claims,
**characterized**
**in that** the data packets received by the receiving unit (1) in a predetermined time period from a respective adjacent base station are stored in a memory (4) and are evaluated after the predetermined time period.

9. Method according to one of the preceding claims,
**characterized**
**in that** the mobile radio system is a GSM system, the data packets to be detected are synchronization data packets, and the characteristic data packets are frequency correction data packets.

10. Mobile station in a mobile radio system, having a control apparatus (2) for controlling the reception of data packets in a receiving unit (1) in the mobile station, in which case the control apparatus is set up in such a way that the receiving unit (1) is switched in each case during predetermined time frames to reception of data packets to be detected from base stations, in which case a plurality of predetermined time frames are in each case assigned to reception of data packets from a specific base station, and the base stations transmit characteristic data packets at a predetermined time interval before the data packets to be detected,
**characterized**
**in that** the control apparatus (2) is set up in such a way that the receiving unit (1) is also switched to reception of characteristic data packets (6) from the respective base station during the predetermined time frames in which this receiving unit (1) is switched to reception of data packets (7) to be detected, and, if it does not receive either a data packet to be detected (7) or a characteristic data packet (6) from the respective base station in a predetermined time frame, the receiving unit (1) is not switched to reception of data packets from this base station during one of the next predetermined time frames, which is assigned to this base station and in which no data packet to be detected from this base station can occur.

11. Mobile station in a mobile radio system, having a control apparatus (2) for controlling the reception of data packets in a receiving unit (1) in the mobile station, in which case the control apparatus is set up in such a way that the receiving unit (1) is switched in each case during predetermined time frames to reception of data packets to be detected from base stations, in which case a plurality of predetermined time frames are in each case assigned to reception of data packets from a specific base station, and the base stations transmit characteristic data packets at a predetermined time interval before the data packets to be detected,
**characterized**
**in that** the control apparatus (2) is set up in such a way that the receiving unit (1) is also switched to reception of characteristic data packets (6) and normal data packets (14) from the respective mobile station during the predetermined time frames in which this receiving unit (1) is switched to reception of data packets (7) to be detected, in which case the normal data packets (14) each have a training sequence (15), and
**in that** the receiving unit (1) in each case receives at least one normal data packet (14) from the respective base station at the start of a time frame which is assigned to a specific base station, from which normal data packet (14) the control apparatus (2) determines the position of the training sequence (15) in the normal data packets (14) from the respective base station and, in the time frames which are assigned to the respective base station, the receiving unit (1) is switched to reception of data packets from the respective base station only during the times which correspond to the training sequences (15) of the normal data packets (14).

12. Mobile station according to Claim 10,
**characterized**
**in that** the control apparatus (2) is set up in such a way that the receiving unit (1) is also switched to reception of normal data packets (14) from the respective mobile stations during the predetermined time frames in which this receiving unit (1) is switched to reception of data packets (7) to be detected and characteristic data packets (6), in which case the normal data packets (14) each have a training sequence (15), and
**in that** the receiving unit (1) in each case receives at least one normal data packet (14) from the respective base station at the start of a time frame which is assigned to a specific base station, from which normal data packet (14) the control apparatus (2) determines the position of the training sequence. (15) in the normal data packets (14) from the respective base station and the receiving unit (1) is switched to reception of data packets from the respective base station only during the time periods which correspond to the training sequences in the normal data packets (14).

13. Mobile station according to Claim 11,
**characterized**
**in that** the control apparatus (2) is set up in such a way that the receiving unit (1) is switched to reception of data packets from the respective base station in the time frames which are assigned to the respective base station only in a portion of the time periods which corresponds to the training sequences (15) in the normal data packets (14), in which case the portion of the time periods is defined in such a manner that the data contained in this portion are sufficient to distinguish the various types of data packets.

14. Mobile station according to Claim 10, 11 or 12,
**characterized**
**in that** the control apparatus (2) is set up in such a way that the exact position of the training sequence (15) in the normal data packets (14) is determined by comparison of the training sequence in the at least one received normal data packet (14) with possible training sequences which are stored in a memory (3) in the mobile station.

15. Mobile station according to one of Claims 10 to 14,
**characterized**
**in that**, when the receiving unit (1) is receiving a frequency correction data packet (6) from the respective base station in a predetermined time frame, the control apparatus (2) does not switch the receiving unit (1) to reception of data packets from this base station once again until the time defined by the predetermined time interval between the synchronization data packets (7) and the frequency correction data packets (6).

16. Mobile station according to one of Claims 10 to 15,
**characterized**
**in that** the control apparatus (2) is set up in such a way that the receiving unit (1) is switched to reception of data packets from another base station when said control apparatus does not switch said receiving unit to reception of data packets from the respective base station during one of the next predetermined time frames.

17. Mobile station according to one of Claims 10 to 16,
**characterized**
**in that** those data packets which are received by the receiving unit (1) in a predetermined time period from a respective base station are stored in a memory (4), and are evaluated by the control apparatus (2) after a predetermined time period.

18. Mobile station according to one of Claims 10 to 17,
**characterized**
**in that** the mobile radio system is a GSM system, the data packets to be detected are synchronization data packets, and the characteristic data packets are frequency correction data packets.

## Revendications

1. Procédé pour commander la réception de paquets de données dans une unité de réception (1) d'une station mobile d'un système de radiocommunication mobile, dans lequel, à chaque fois pendant des trames temporelles prédéfinies, ladite unité de réception (1) peut être commutée sur la réception de paquets de données à détecter de stations de base, plusieurs trames temporelles prédéfinies étant attribuées à chaque fois à la réception de paquets de données d'une station de base déterminée et les stations de base émettant des paquets de données caractéristiques dans un intervalle de temps prédéfini avant les paquets de données à détecter,
**caractérisé en ce que**
l'unité de réception (1), pendant les trames temporelles prédéfinies dans lesquelles elle est commutée sur la réception de paquets de données à détecter (7), est commutée aussi sur la réception de paquets de données caractéristiques (6) de la station de base respective, et
**en ce que** l'unité de réception (1), dans le cas où elle ne reçoit ni un paquet de données à détecter (7) ni un paquet de données caractéristiques (6) de la station de base respective dans une trame temporelle prédéfinie, n'est pas commutée sur la réception de paquets de données de cette station de base pendant l'une des prochaines trames temporelles prédéfinies, laquelle est attribuée à cette station de base et dans laquelle aucun paquet de données à détecter de cette station de base n'est susceptible d'apparaître.

2. Procédé pour commander la réception de paquets de données dans une unité de réception (1) d'une station mobile d'un système de radiocommunication mobile, dans lequel, à chaque fois pendant une période prédéfinie, l'unité de réception (1) peut être commutée sur la réception de paquets de données à détecter de stations de base, plusieurs trames temporelles prédéfinies étant attribuées à chaque fois à la réception de paquets de données d'une station de base déterminée et les stations de base émettant des paquets de données caractéristiques dans un intervalle de temps prédéfini avant les paquets de données à détecter,
**caractérisé en ce que**
l'unité de réception (1), pendant les trames temporelles prédéfinies dans lesquelles elle est commutée sur la réception de paquets de données à détecter (7), est commutée aussi sur la réception de paquets de données caractéristiques (6) et de paquets de données normales (14) de la station de base respective, les paquets de données normales comprenant chacun une séquence d'entraînement,
et **en ce que** l'unité de réception (1) reçoit, à chaque fois au début d'une trame temporelle attribuée à une station de base déterminée, au moins un paquet de données normales (14) de la station de base respective afin de déterminer la position de la séquence d'entraînement (15) dans les paquets de données normales (14) de cette station de base, après quoi, dans les trames temporelles attribuées à la station de base respective, l'unité de réception (1) n'est commutée que pendant les périodes correspondant aux séquences d'entraînement (15) des paquets de données normales (14) de cette station de base sur la réception de paquets de données de cette station de base.

3. Procédé selon la revendication 1,
**caractérisé en ce que**
l'unité de réception (1), pendant les trames temporelles prédéfinies dans lesquelles elle est commutée sur la réception de paquets de données à détecter (7) et de paquets de données caractéristiques (6), est commutée aussi sur la réception de paquets de données normales (14) de la station de base respective, les paquets de données normales (14) comprenant chacun une séquence d'entraînement (15),
et **en ce que** l'unité de réception (1) reçoit, à chaque fois au début d'une trame temporelle attribuée à une station de base déterminée, au moins un paquet de données normales (14) de la station de base respective afin de déterminer la position de la séquence d'entraînement (15) dans les paquets de données normales (14) de cette station de base, après quoi, dans les trames temporelles attribuées à la station de base respective, l'unité de réception (1) n'est commutée que pendant les intervalles de temps correspondant aux séquences d'entraînement (15) des paquets de données normales (14) de cette station de base sur la réception de paquets de données de cette station de base.

4. Procédé selon la revendication 2 ou 3,
**caractérisé en ce que**
l'unité de réception (1), dans les trames temporelles attribuées à la station de base respective, n'est commutée que dans une partie des intervalles de temps correspondant aux séquences d'entraînement (15) des paquets de données normales (14) sur la réception de paquets de données de la station de base respective voisine, ladite partie des intervalles de temps étant fixée de telle sorte que les données qui y sont contenues suffisent pour différencier les différents types de paquets de données.

5. Procédé selon la revendication 2, 3 ou 4, **caractérisé en ce que** la position précise de la séquence d'entraînement (15) dans les paquets de données normales (14) est déterminée par comparaison de la séquence d'entraînement (15) dudit au moins un paquet de données normales (14) reçu avec des séquences d'entraînement possibles stockées dans une mémoire (3) de la station mobile.

6. Procédé selon l'une des revendications précédentes, **caractérisé en ce que**, dans le cas où l'unité de réception (1) reçoit un paquet de données caractéristiques (6) de la station de base respective dans une trame temporelle prédéfinie, ladite unité de réception n'est commutée qu'à l'instant déterminé par l'intervalle de temps prédéfini entre les paquets de données à détecter (7) et les paquets de données caractéristiques (6) à nouveau sur la réception de paquets de données de cette station de base.

7. Procédé selon l'une des revendications précédentes, **caractérisé en ce que** l'unité de réception (1), dans le cas où elle n'est pas commutée sur la réception de paquets de données à détecter (7) et de paquets de données caractéristiques (6) de la station de base respective pendant une trame temporelle suivante, est commutée sur la réception de paquets de données d'une autre station de base.

8. Procédé selon l'une des revendications précédentes, **caractérisé en ce que** les paquets de données reçus d'une station de base voisine respective par l'unité de réception (1) dans un intervalle de temps prédéfini sont stockés dans une mémoire (4) et évalués après ledit intervalle de temps prédéfini.

9. Procédé selon l'une des revendications précédentes, **caractérisé en ce que** le système de radiocommunication mobile est un système GSM et que les paquets de données à détecter sont des paquets de données de synchronisation et les paquets de données caractéristiques sont des paquets de données de correction de fréquence.

10. Station mobile d'un système de radiocommunication mobile, comprenant un dispositif de commande (2) pour commander la réception de paquets de données dans une unité de réception (1) de ladite station mobile, ledit dispositif de commande étant configuré de manière à commuter ladite unité de réception (1), à chaque fois pendant des trames temporelles prédéfinies, sur la réception de paquets de données à détecter de stations de base, plusieurs trames temporelles prédéfinies étant attribuées à chaque fois à la réception de paquets de données d'une station de base déterminée et les stations de base émettant des paquets de données caractéristiques dans un intervalle de temps prédéfini avant les paquets de données à détecter,
**caractérisée en ce que** le dispositif de commande (2) est configuré de manière à commuter l'unité de réception (1), pendant les trames temporelles prédéfinies dans lesquelles elle est commutée sur la réception de paquets de données à détecter (7), aussi sur la réception de paquets de données caractéristiques (6) de la station de base respective et, dans le cas où l'unité de réception (1) ne reçoit ni un paquet de données à détecter (7) ni un paquet de données caractéristiques (6) de la station de base respective dans une trame temporelle prédéfinie, à ne pas la commuter sur la réception de paquets de données de cette station de base pendant l'une des prochaines trames temporelles prédéfinies, laquelle est attribuée à cette station de base et dans laquelle aucun paquet de données à détecter de cette station de base n'est susceptible d'apparaître.

11. Station mobile d'un système de radiocommunication mobile, comprenant un dispositif de commande (2) pour commander la réception de paquets de données dans une unité de réception (1) de ladite station mobile, ledit dispositif de commande étant configuré de manière à commuter l'unité de réception (1), à chaque fois pendant des trames temporelles prédéfinies, sur la réception de paquets de données à détecter de stations de base, plusieurs trames temporelles prédéfinies étant attribuées à chaque fois à la réception de paquets de données d'une station de base déterminée et les stations de base émettant des paquets de données caractéristiques dans un intervalle de temps prédéfini avant les paquets de données à détecter,
**caractérisée en ce que**
le dispositif de commande (2) est configuré de manière à
commuter l'unité de réception (1), pendant les trames temporelles prédéfinies dans lesquelles elle est commutée sur la réception de paquets de données à détecter (7), aussi sur la réception de paquets de données caractéristiques (6) et de paquets de données normales (14) de la station de base respective, les paquets de données normales (14) comprenant chacun une séquence d'entraînement (15), et à ce que
l'unité de réception (1) reçoive, à chaque fois au début d'une trame temporelle attribuée à une station de base déterminée, au moins un paquet de données normales (14) de la station de base respective, à partir duquel le dispositif de commande (2) détermine la position de la séquence d'entraînement (15) dans les paquets de données normales (14) de cette station de base, et à ce que dans les trames temporelles attribuées à la station de base respective, l'unité de réception (1) ne soit commutée que pendant les périodes correspondant aux séquences d'entraînement (15) des paquets de données normales (14) de cette station de base sur la réception de paquets de données de cette station de base.

12. Station mobile selon la revendication 10,
**caractérisée en ce que**
le dispositif de commande (2) est configuré de manière à commuter l'unité de réception (1), pendant les trames temporelles prédéfinies dans lesquelles elle est commutée sur la réception de paquets de données à détecter (7) et de paquets de données caractéristiques (6), aussi sur la réception de paquets de données normales (14) de la station de base respective, les paquets de données normales (14) comprenant chacun une séquence d'entraînement (15), et à ce que
l'unité de réception (1) reçoive, à chaque fois au début d'une trame temporelle attribuée à une station de base déterminée, au moins un paquet de données normales (14) de la station de base respective, à partir duquel le dispositif de commande (2) détermine la position de la séquence d'entraînement (15) dans les paquets de données normales (14) de la station de base respective, et à ce que dans les trames temporelles attribuées à la station de base respective, l'unité de réception (1) ne soit commutée que pendant les intervalles de temps correspondant aux séquences d'entraînement (15) des paquets de données normales (14) de cette station de base sur la réception de paquets de données de cette station de base.

13. Station mobile selon la revendication 11,
**caractérisée en ce que**
le dispositif de commande (2) est configuré de manière à ne commuter l'unité de réception (1), dans les trames temporelles attribuées à la station de base respective, que dans une partie des intervalles de temps correspondant aux séquences d'entraînement (15) des paquets de données normales (14) sur la réception de paquets de données de la station de base respective, ladite partie des intervalles de temps étant fixée de telle sorte que les données qui y sont contenues suffisent pour différencier les différents types de paquets de données.

14. Station mobile selon la revendication 10, 11 ou 12;
**caractérisée en ce que**
le dispositif de commande (2) est configuré de manière à déterminer la position précise de la séquence d'entraînement (15) dans les paquets de données normales (14) par comparaison de la séquence d'entraînement dudit au moins un paquet de données normales (14) reçu avec des séquences d'entraînement possibles stockées dans une mémoire (3) de la station mobile.

15. Station mobile selon l'une des revendications 10 à 14,
**caractérisée en ce que**
dans le cas où l'unité de réception (1) reçoit un paquet de données caractéristiques (6) de la station de base respective dans une trame temporelle prédéfinie, le dispositif de commande (2) ne commute qu'à l'instant fixé par l'intervalle de temps prédéfini entre les paquets de données de synchronisation (7) et les paquets de données de correction de fréquence (6) ladite unité de réception (1) à nouveau sur la réception de paquets de données de cette station de base.

16. Station mobile selon l'une des revendications 10 à 15,
**caractérisée en ce que**
le dispositif de commande (2) est configuré de manière à commuter l'unité de réception (1), dans le cas où celle-ci n'est pas commutée sur la réception de paquets de données de la station de base respective pendant une prochaine trame temporelle prédéfinie, sur la réception de paquets de données d'une autre station de base.

17. Station mobile selon l'une des revendications 10 à 16,
**caractérisée en ce que**
les paquets de données reçus d'une station de base respective par l'unité de réception (1) dans un intervalle de temps prédéfini sont stockés dans une mémoire (4) et évalués après ledit intervalle de temps prédéfini.

18. Station mobile selon l'une des revendications 10 à 17,
**caractérisée en ce que**
le système de radiocommunication mobile est un système GSM et que les paquets de données à détecter sont des paquets de données de synchronisation et les paquets de données caractéristiques sont des paquets de données de correction de fréquence.
